# EUROPEAN PATENT SPECIFICATION

(11) **EP 4 461 125 B1**
(45) Date of publication and mention of the grant of the patent: **07.10.2026**
(21) Application number: 24168518.9
(22) Date of filing: 04.04.2024
(51) Int. Cl.: A01F 15/07

(54) **BALE WRAPPER**
BALLENWICKLER
ENVELOPPEUR DE BALLES

(30) Priority: 11.05.2023 GB 202307016
(43) Date of publication of application: 13.11.2024
(73) Proprietor: Kuhn-Geldrop B.V., 5667 KP Geldrop (NL)
(72) Inventor: TENBULT, Henricus Theodorus Hubertus, 5531 KL BLADEL (NL); KWINTEN, Mattheus Louisa Johannes, 5571 LZ BERGEIJK (NL); VAN DER LEE, Lucas Theodorus Petrus, 5254 JT HAARSTEEG (NL)
(74) Representative: Murgitroyd & Company

(56) References cited:
- EP-A1- 4 118 950
- EP-A2- 2 156 728
- WO-A1-2008/129432
- WO-A2-2022/136369
- US-A- 5 517 807
- US-A1- 2016 029 563

## Description

The present invention relates to a bale wrapper that applies a stretch film wrapping to an agricultural bale. The present invention also relates to an agricultural bale wrapping method.

The agricultural bale may for example be cylindrical, which is called a "round" bale.

Bale wrappers are well known to those of ordinary skill in the art, and therefore will not be described in detail herein. In general terms only, a bale wrapper has a bale support for supporting a for example round bale with its longitudinal axis extending generally parallel to the ground, and which may operate to rotate the for example round bale generally about its axis (a first axis) while relative rotation takes place between a film dispenser reel and the bale support about a second axis which extends substantially perpendicular to the first axis during a wrapping cycle.

A bale wrapper apparatus may be an independently operated machine, carrying out wrapping of a bale only, or it may be incorporated in a combined or integrated apparatus (combination baler/bale wrapper) which is able to carry out bale-formation and bale wrapping in a single apparatus.

A stretch film wrapping may be applied to an agricultural bale, in order to protect the contents of the bale from the weather and, in the case of silage crops, to form a substantially airtight and watertight enclosure within which the crop can mature or ferment to form silage.

A pre-stretcher unit may be provided in the path of travel of a length or strip of film as it is withdrawn from a dispenser reel to be applied as overlapping pre-stretched windings to envelope the bale during the wrapping cycle.

The pre-stretched film subsequently tightens itself onto the outer surface of the bale under the action of the elastic energy stored in the pre-stretched windings, after completion of the wrapping cycle and cutting of the film strip from the dispenser, so as to form a tight enclosure of the bale.

The pre-stretcher may comprise two spaced-apart rollers around which the film passes, which rotate at different circumferential speeds to stretch the film. The film strip is withdrawn from the dispenser reel, and passed through the pre-stretcher unit, under the action of a so-called "application force" generated by the relative rotation about the second axis, and rotation of the bale about its axis by the bale support.

Passage of the film strip through the pre-stretcher unit causes elongation of the film prior to application of the film strip as successive overlapping windings on the bale. In this way, successive layers of coverage of film are applied to the bale.

The application force is mainly determined by the stretch ratio created in the pre-stretcher (e.g. the difference in circumferential speed of the rollers). Only a small part is determined by the unwinding force needed for unrolling the film from the reel.

Increasing the stretch ratio provides certain benefits. In particular, the greater the stretch ratio, the more elongation of the film, the thinner the film, so the more economical the use of film. Film savings are beneficial for the total cost of the wrapping process. Less film is put on the bale and more bales can be wrapped from 1 reel of film. The bale itself on average therefore costs less and the operator has fewer moments where the film reels needs to be changed, during which time the operator cannot wrap any bales (reduced non-operational time). This increases the overall capacity in wrapped bales per hour. Film savings also have environmental advantages. Fewer resources, like basic materials and energy, are needed to produce the amount of stretch film for a single bale. Also the amount of waste per single bale is reduced which is advantageous for the recycling process for instance regarding use of energy during the recycling process.

Also, the greater the stretch ratio, the higher the application force, the more tightly the strip is applied to the bale, so the better the air tightness of the bale.

However, an excessive application force and thinness of the film has a negative effect on puncture and tear resistance, in that it weakens the film too much so that bale contents may puncture the film which can lead to disruptions in the film supply from the dispensers. Subsequently these disruptions of the film can lead to uneven distribution of the film envelope on the bale resulting in poorly wrapped bales. Due to the disruptions in the film, the overall capacity of the wrapper will be lowered (fewer wrapped bales per hour), as machine drivers have to step down from the tractor to solve the disruptions. It is therefore desirable to have a compromise in setting the stretch ratio so as to provide a) satisfactory tightness of the wrapped bale and economic usage of film and b) sufficient resistance to puncturing and tearing.

The stretch ratio is therefore usually set at an optimum level to provide risk-free elongation of the film strip, which will be determined by the size and shape of the bale, its speed of rotation about its longitudinal axis, the relative speed of rotation about the second axis, the prevailing temperature and the nature of any potentially puncturing material (stubble).

Power-driven pre-stretcher units may be provided. These have the function of applying torque to the pre-stretcher unit, which therefore reduces the "application force".

A power-driven pre-stretcher unit is similar to a standard (non-powered) pre-stretcher unit, except that it is provided with a power source. The power source adds torque to a drive roller of the pre-stretcher unit, and this torque exerts a force which is a part (but not all) of the stretching force required to stretch the film. Therefore, the pull-off force (the application force) is reduced. The torque applied to the pre-stretcher unit therefore reduces the proportion of the "application force" which otherwise would be required (in the absence of the power source).

Given that the "application force" is no longer required to cause 100% of the stretching force on the film, the windings can be applied to the bale under less tensile pulling force from the bale. This makes for a gentler wrapping action, with less tensile force applied to the film strip as it forms successive overlapping windings around the bale, and therefore there is less risk of puncture of the film by outwardly protruding elements of the bale. The reason not all of the "application force" is provided by the power source is to ensures the film is laid tightly around the bale.

A mobile agricultural bale wrapper apparatus with rotational wrapper ring provides a simple, fast, stable and reliable way of wrapping of a round bale. Such an arrangement also provides a compact and structural strong construction/design and requires little maintenance. A bale wrapper with rotational ring is cost efficient and offers a higher capacity for wrapping bales (wrapped bales per hour). The rotational wrapper ring may be positioned vertically or slightly inclined to the vertical to establish a compact bale wrapper or baler/bale wrapper combination. When wrapping a round bale, the bale is partly moved through the rotational wrapper ring in order to keep a compact bale wrapper.

The bale wrapper apparatus can be self-propelled or can be towed by a tractor, both for driving on the public roads and in the fields. Fields are not always straight/flat like a pool (billiards) table. The fields consist of bumps and holes that the bale wrapper must drive over. Furthermore, fields can be swampy, in which a wrapper or baler/wrapper combination can leave indentations. Therefore, the lowest parts of the bale wrapper or baler/bale wrapper combination will be closer to the soil because of these indentations, having more risk of being damaged when hitting the ground surface or any obstacles on the ground surface. Entering and leaving fields may lead to problems as public roads may be located at a higher or lower level compared to the field itself. Sufficient ground clearance of the bale wrapper and bale wrapper parts ensure the bale wrapper and its parts are not touching the ground and being damaged.

For these reasons, the rotational wrapper ring is located between the loading arm (in the case of a standalone bale wrapper) or the transfer means (in the case of a combination baler/bale wrapper) and the bale support. Also, with the rotational wrapper ring positioned such, the rotational wrapper ring does not obstruct the loading/transfer, wrapping or unloading of a bale.

This position of the rotational wrapper ring in the bale wrapper makes it preferable for the bale to be at least partly transported through the rotational wrapper ring before the wrapping with stretch film takes place. As the bale travels through the centre of the rotational ring, there may be little space for additional driving parts within the inner circle of the ring.

It is desirable to provide a bale wrapper including a film pre-stretcher that stretches the film by the desired amount, by using a power-driven pre-stretcher system for optimal economical use of the film, minimal risk of disruptions of the film during wrapping and where the power to the powerstretcher is provided in such a way that the compact building and optimal ground clearance of the baler is kept and which provides smooth transfer of a bale to be wrapped towards and from the bale support of the bale wrapper. US2016/029563A1, WO2008/129432A1, EP2156728A1, US5517807A and EP4118950A1 disclose related art.

The invention is defined in any independent claims. Optional embodiments are set out in any dependent claims.

In an example, a mobile bale wrapper may comprise a rotational wrapper ring for wrapping stretch film around a round bale, where a film pre-stretcher unit may be powered with help of a power transfer ring and the power transfer ring may be positioned in such a manner and of such a size that it is sufficient large enough for the bale to be transferred therethrough, not interfering with the loading/transfer, wrapping and unloading of the bale. Furthermore, the positioning and the size of the power transfer ring may provide enough ground clearance for the bale wrapper to drive to, into and/or on the fields.

With the power transfer ring positioned around the bale the power transfer ring is an effective solution to facilitate the transfer of power needed for elongation of the film in the power-driven pre-stretcher units as either power is directly taken mechanically from the ring, or the ring is used to facilitate the guidance of power like for example hydraulic, pneumatic or electric power.

With a power-driven pre-stretcher unit as described, the maximum application force between the bale and stretcher unit may be reduced, so as to allow a more consistent and even layer of film to be applied to the bale, with reduced risk of disruptions during wrapping.

Embodiments of the invention will now be described, by way of example only, with reference to the accompanying drawings, in which:
Figure 1 is a simplified side view of a bale wrapper, in use, when connected to a tractor;
Figure 2 is a representation of the principle of wrapping a round bale using two perpendicular axis;
Figure 3a is a simplified side view of the bale wrapper, showing a round bale to be loaded from the ground;
Figure 3b is a simplified side view of the bale wrapper, showing the bale being loaded from the ground towards the bale support;
Figure 3c is a simplified side view of the bale wrapper, showing the bale, supported on and rotated by the bale support, being wrapped with stretch film;
Figure 3d is a simplified side view of the bale wrapper, showing the wrapped bale ejected onto the ground;
Figure 4 is a detailed perspective view of the bale wrapper;
Figure 5 is a detailed perspective view of the power transfer ring of the bale wrapper;
Figure 6 is a simplified side view of a combined baler/bale wrapper, in use, when connected to a tractor;
Figure 7a is a simplified side view of the combined baler/bale wrapper, showing a round bale being formed;
Figure 7b is a simplified side view of the combined baler/bale wrapper, showing the formed bale being transferred from the baler part of the combined baler/bale wrapper to the bale support of the bale wrapper part of the combined baler/bale wrapper;
Figure 7c is a simplified side view of the combined baler/bale wrapper, showing the formed bale being wrapped in stretch film;
Figure 7d is a simplified side view of the combined baler/bale wrapper, showing the wrapped bale ejected onto the ground;
Figure 8 is a perspective cut-away view of an example of drive means for the rotational wrapper ring;
Figure 9a is a simplified side cut-away view of an example of the pre-stretcher unit and a friction wheel;
Figure 9b is a simplified side cut-away view of an example of the pre-stretcher unit and drive unit, according to a variation;
Figure 10a is a simplified cut-away view of an example of the pre-stretcher unit and a friction wheel;
Figure 10b is a simplified cut-away view of an example of the pre-stretcher unit and drive unit, according to a variation;
Figure 11 is a is a simplified side view of a combined baler/bale wrapper, the mobile agricultural baler/bale wrapper combination comprising a power transfer ring drive unit to drive rotation of the power transfer ring; and
Figure 12 is a flowchart relating to a method for agricultural bale wrapping.

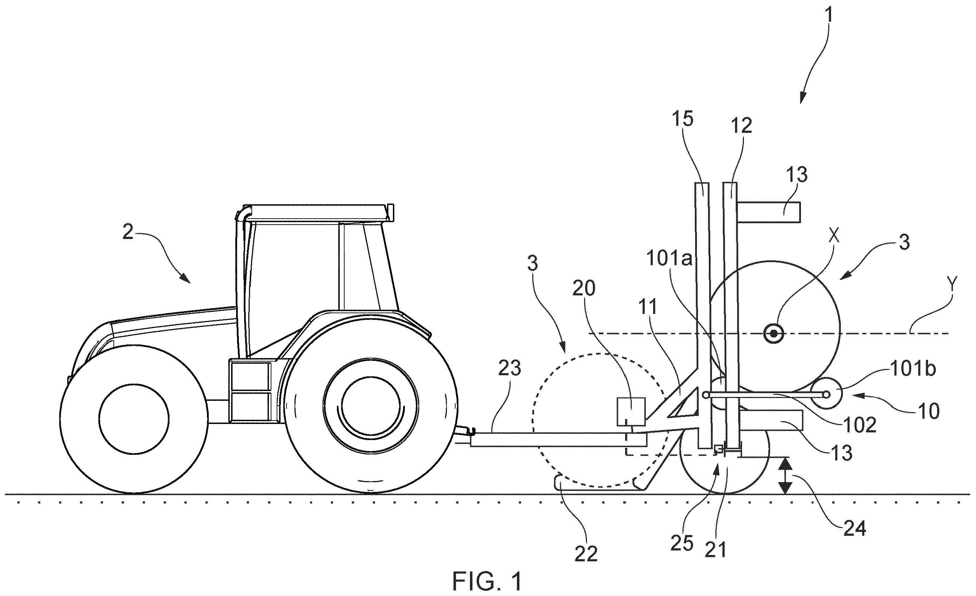

**Figure 1** shows a mobile agricultural bale wrapper 1, when connected to a tractor 2, and onto which a round bale 3 has been loaded from the ground (shown in dashed lines) to a wrapping position. The mobile agricultural bale wrapper 1 may comprise a bale support 10 for supporting the bale 3 and rotating the bale 3 about a first axis, X. The first axis in figure 1 may for example extend into the page. The bale support 10 may be referred to as a table, a wrapping table or a means for supporting the bale for wrapping. The bale support 10 may for example include two rollers 101a, 101b attached to a structural frame 11 of the mobile agricultural bale wrapper 1. A front roller 101a may be fixed (only able to rotate about its axis) to the structural frame 11. A rear roller 101b may be attached to the structural frame 11 by supports 102. Supports 102 may be lowered, to allow the bale 3 to be deposited on the ground, after wrapping.

The mobile agricultural bale wrapper 1 may comprise a rotational wrapper ring 12. The rotational wrapper ring 12 may be arranged to rotate around a bale 3 and may comprise a film dispenser 13.

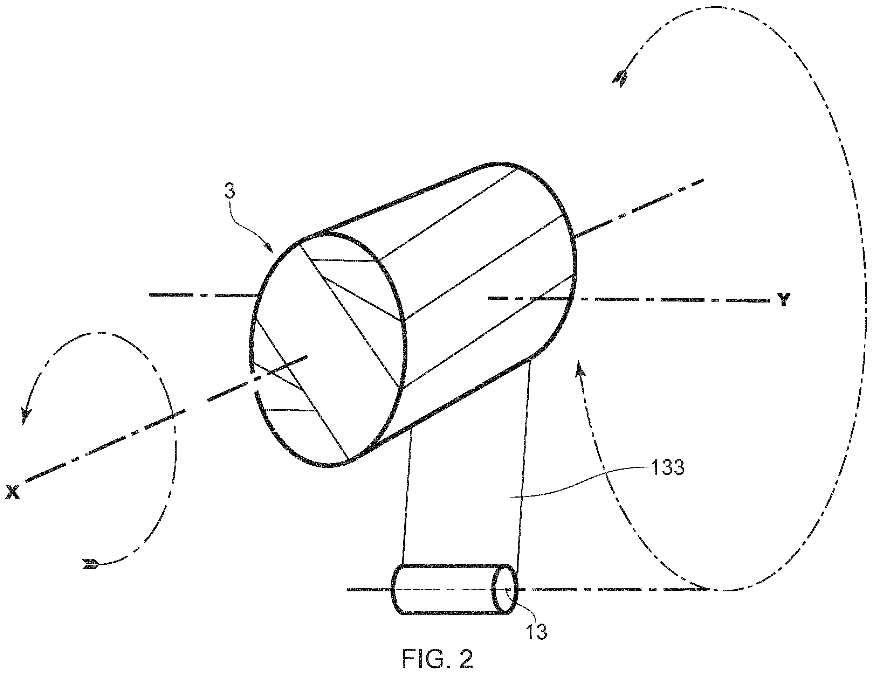

Figure 2 shows an example of how the round bale 3 may be rotated about its longitudinal axis X (the first axis). The figure further shows an example of how the film dispenser 13 may rotate around the bale 3 about axis Y. In this way, the bale 3 may be wrapped with stretch film in partially overlapping layers deposited onto the bale 3 as the bale 3 is rotated about its axis X.

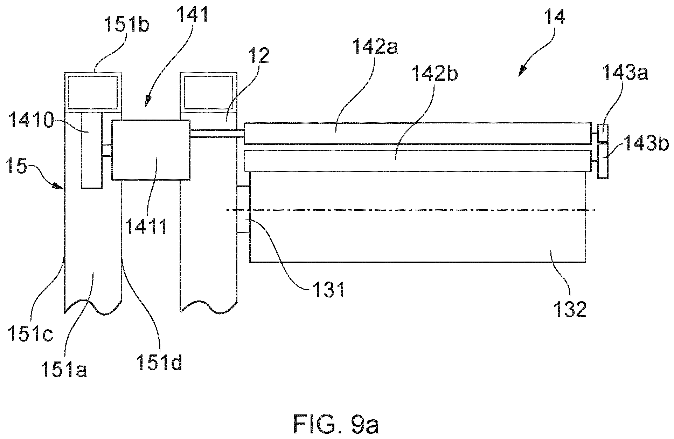

The film dispenser 13 may comprise a holder 131 for a roll 132 of stretch film 133 (not shown in detail in figure 1) to dispense the film 133 when the rotational wrapper ring 12 is rotated. The rotational wrapper ring 12 may in some examples comprise two or more film dispensers 13, which may wrap the bale 3 concurrently in order to improve the efficiency of the wrapping. The mobile agricultural bale wrapper 1 may further comprise a film pre-stretcher unit 14 that is configured to pre-stretch the film 133 by an elongation amount and apply the pre-stretched film to the bale 3. The rotational wrapper ring 12 may provide relative rotation between the bale support 10 and the film dispenser 13 about a second axis, Y. The second axis may extend substantially perpendicular to the first axis so that the pre-stretched film applied to the bale 3 forms a bale wrapping that covers a side surface and end faces of the bale 3, as shown in figure 2, for example. The film pre-stretcher unit 14 may comprise a drive unit 141 (shown in figure 9a) to control rotation of the film pre-stretcher unit 14. The mobile agricultural bale wrapper 1 may further comprise a power transfer ring 15, substantially adjacent to the rotational wrapper ring 12, to transfer power to the drive unit 141. The power transfer ring 15 may be used to transfer the power needed to reach higher elongation ratios of the stretch film 133.

As further shown in figure 1, the mobile agricultural bale wrapper 1 may further comprise a control unit 20 for controlling movement of the bale support 10 and rotational wrapper ring 12. The bale wrapper 1 may further comprise wheels 21 to support movement of the bale wrapper 1 when towed behind a tractor 2, for example. The wheels 21 may be positioned, and may have a desired size, to provide sufficient ground clearance 24 to allow the bale wrapper 1 to pass over bumps or undulations in a field. The bale wrapper 1 may further comprise a loading arm 22 for lifting and holding a bale 3, to load the bale 3 onto the bale support 10. The bale wrapper 1 may further comprise a drawbar 23 to connect to the tractor 2, so that the bale wrapper 1 may be towed behind the tractor 2. In some examples, the rotational wrapper ring 12 may be driven by a drive motor 25.

In some examples, the bale wrapper 1 is mobile and may be self-propelled or can be towed by a tractor 2 as shown in figure 1, for driving on public roads and during operation in the field. In the field the bale wrapper 1 may drive or be towed towards bales 3 that are deposited in the field by a baler. A bale 3 may typically be 100cm to 150cm in diameter and 120cm in width, for a round bale. However, other sizes are envisaged.

In some examples, the rotational wrapper ring 12 and the power transfer ring 15 may be positioned close to or in line with the axle of the wheel 21. For example, the rotational wrapper ring 12 and the power transfer ring 15 may be positioned so that as the bale wrapper 1 is driven over uneven fields, the lowest part of the rings 12, 15 is protected from touching the ground. This is achieved by the fact that the wheel 21 extends further below, in front of, and behind the lowest part of the rings 12, 15, as shown in figure 1. If the rings 12, 15 were to be positioned further forward than the wheel 21 or further back, behind the wheel 21, a greater ground clearance may be needed to ensure the rings 12, 15 do not contact any bumps in the ground when the bale wrapper 1 is moving. This positioning of the rings 12, 15 may also be incorporated into a combination baler/bale wrapper.

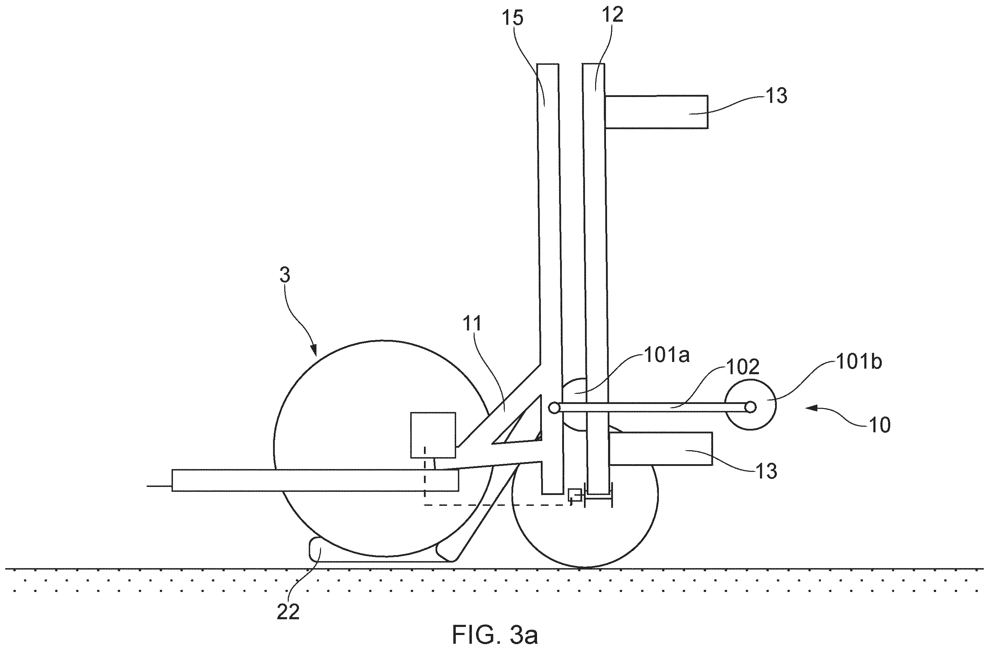

Figures 3a to 3d show an exemplary sequence of picking up a round bale 3, loading the bale 3 onto the wrapping table 10, wrapping the bale 3 and unloading or depositing the bale 3 back onto the ground. The tractor 2 attached to the bale wrapper 1 is not shown in figures 3a to 3d. In the example shown in figures 3a to 3d, the power transfer ring 15 is depicted as being fixed to or part of the structural frame 11 of the mobile bale wrapper 1 and thus may not be able to rotate relative to the structural frame 11. However, alternative configurations are envisaged in which the power transfer ring 15 is able to rotate, and/or rotate separately to/independently from the rotational wrapper ring 12.

Figure 3a shows an example of the bale wrapper 1 approaching the bale 3 with a loading arm 22 in order to lift the bale 3 from the ground. The loading arm 22 may alternatively hold the bale 3 while the bale wrapper 1 is moving, if for example a first bale is already being wrapped (not shown). In this way, the bale wrapper 1 may continue to move towards other bales 3 for wrapping, while wrapping a first bale and holding a second bale.

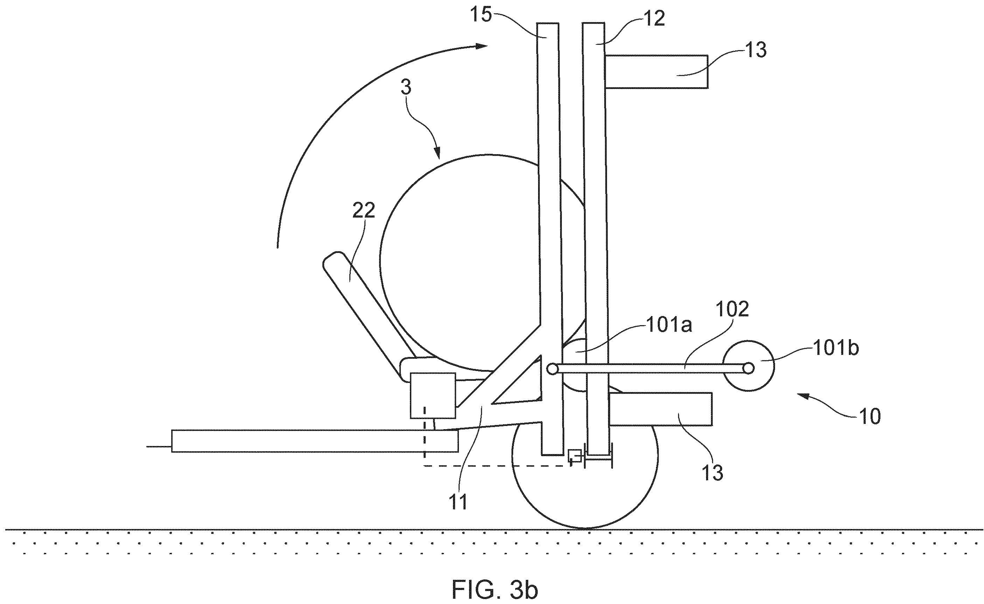

The bale wrapper 1 picks up the bale 3 from the ground with a loading arm 22, then, as shown in figure 3b, the bale 3 is transported at least partly through the rotational wrapper ring 12 and the power transfer ring 15. Subsequently the bale 3 is laid onto the bale support 10. Between figure 3a and figure 3b, the loading arm 22 may be tilted to achieve the lifting of the bale 3. Then, when the bale support 10 is ready to receive the bale 3, the loading arm 22 may be tilted further so as to push the bale 3 over the front roller 101a and onto the bale support 10.

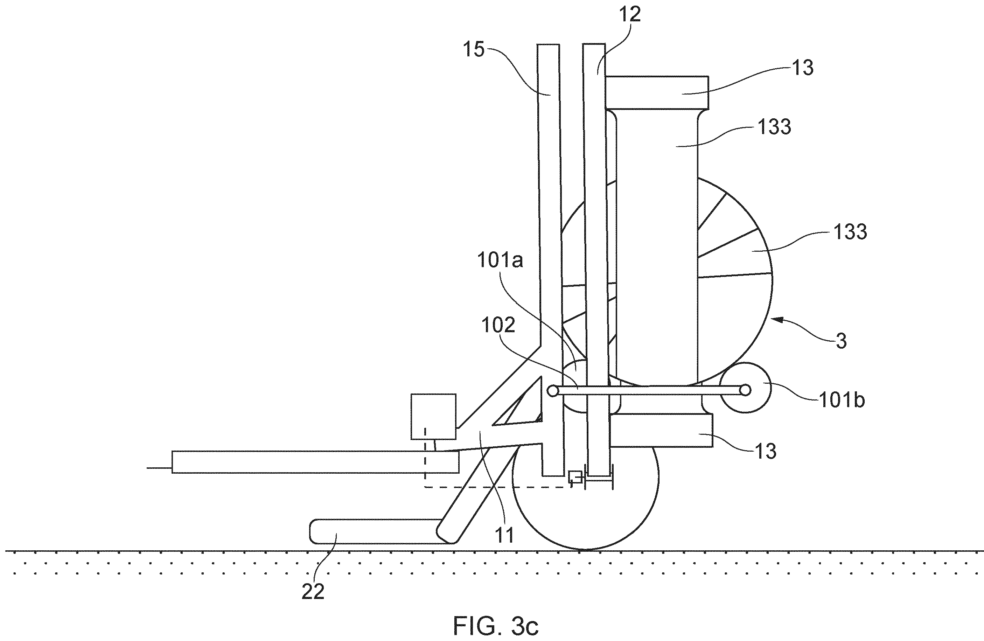

As shown in figure 3c, when wrapping the bale 3 with the stretch film 133, the bale 3 is rotated on the bale support 10 around it's longitudinal axis (the X axis as shown in figure 2) by rotating the front and rear rollers 101a, 101b. At the same time the bale 3 is rotated on the bale support 10, the rotational wrapper ring 12 is rotating around the Y axis (as shown in figure 2), which axis extends substantially perpendicular to the longitudinal axis of the bale 3 in order to envelope the complete bale 3 with stretch film 133.

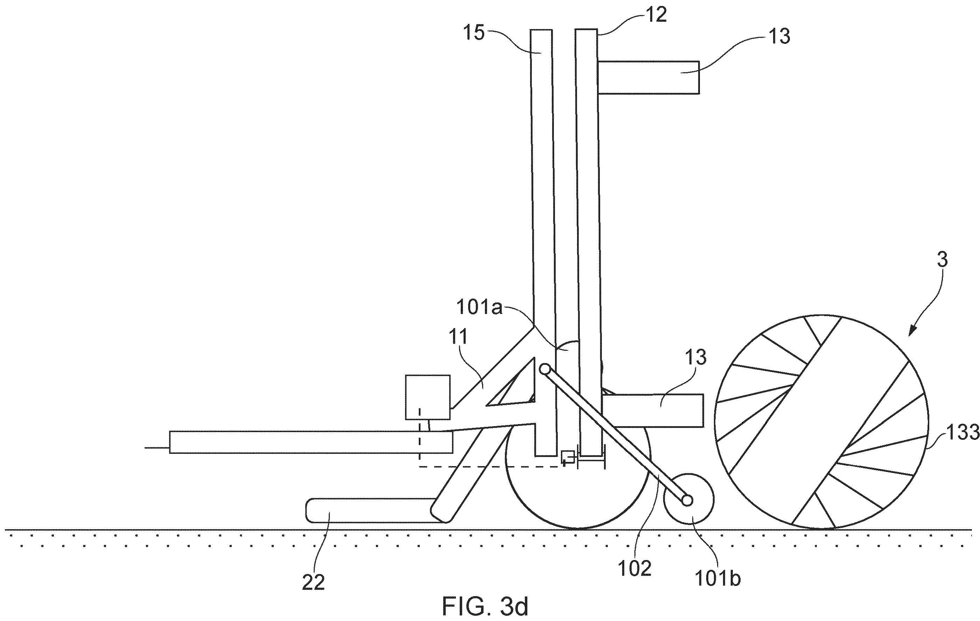

As shown in figure 3d, after wrapping, the wrapped bale 3 is deposited on the ground. This may be achieved by lowering the rear roller 101b.

Optionally the bale wrapper 1 can be used in a stationary set up where bales 3 are brought to the bale wrapper 1.

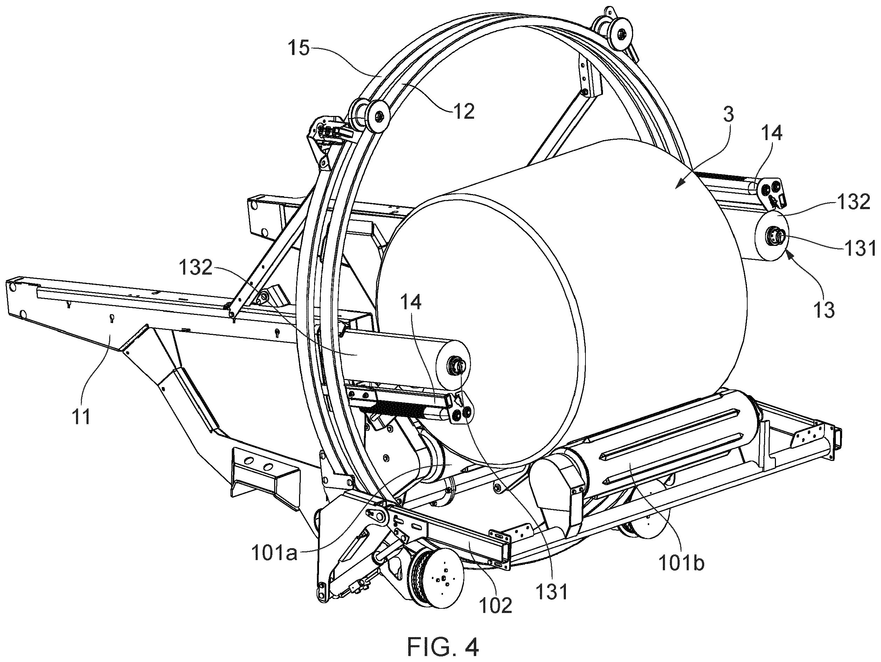

Figure 4 shows a perspective view of the bale wrapper 1 with power transfer ring 15. The bale wrapper 1 as shown in figure 4, may be incorporated in a combined baler/bale wrapper. Figure 4 further shows a part of the structural frame 11, which may be part of/allow connection to the baler/bale wrapper combination apparatus. A bale 3 to be wrapped is situated onto the bale support rollers, which may include a front roller 101a and a rear roller 101b. In figure 4 the power transfer ring 15 is pictured as part of the structural frame 11 of the baler/bale wrapper combination and thus not able to rotate relative to the structural frame 11. When the power transfer ring 15 is a part of or incorporated in the structural frame 11 of the bale wrapper 1 or baler/wrapper combination, the power transfer ring 15 may be used as structural support for the rotational wrapper ring 12. In this case, a separate frame for supporting the rotational wrapper ring 12 is not needed, so that the bale wrapper 1 is made more compact.

As shown in figure 4, the film dispenser 13 may comprise a holder 131 for a roll 132 of stretch film 133 to dispense the film 133 when the rotational wrapper ring 12 is rotated. In the example of figure 4, the rotational wrapper ring 12 comprises two film dispensers 13. The two film dispensers 13 may wrap the bale 3 concurrently. Therefore, when compared with wrapping using a single dispenser 13, the bale 3 maybe wrapped twice as quickly with fewer rotations of the rotational wrapper ring 12. In this example, rotation of the bale 3 by the bale support 10 may be adjusted to achieve the desired amount of overlap between each layer of film 133 deposited on the bale 3. The mobile agricultural bale wrapper 1 may further comprise a film pre-stretcher unit 14 that is configured to pre-stretch the film 133 by an elongation amount and apply the pre-stretched film to the bale 3. In the example shown in figure 4 the bale wrapper 1 includes two film pre-stretcher units 14. The bale wrapper 1 may for example include a pre-stretcher unit 14 for each film dispenser 13. In one example, the rotational wrapper ring 12 and the power transfer ring 15 are circular in shape. However, in other examples, one or both may be square with rounded edges, hexagonal, octagonal or any other suitable shape.

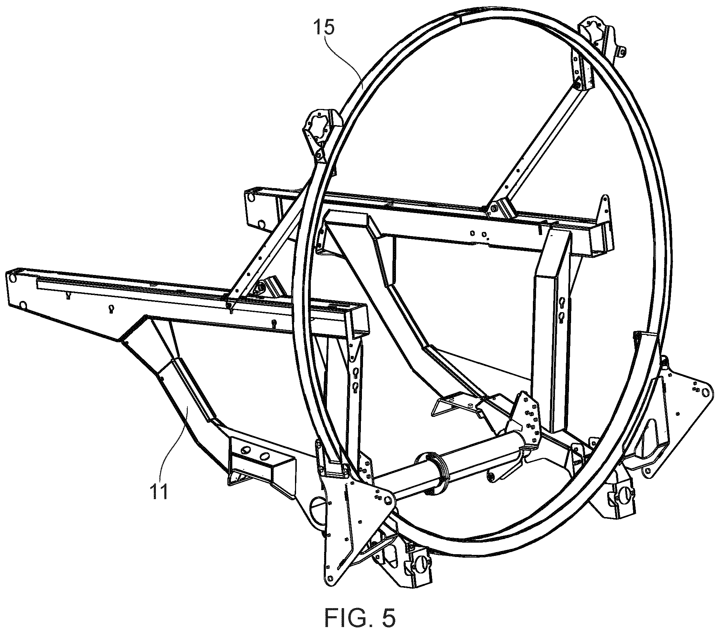

Figure 5 is a stripped-down version of figure 4 and shows a perspective view of the power transfer ring 15 of the bale wrapper 1, as attached to the structural frame 11.

In some examples, the bale 3 to be wrapped may be passed at least partly through the rotational wrapper ring 12 and the power transfer ring 15 before wrapping. Optionally only a part of the bale 3 is transported through the power transfer ring 15 when transporting the bale 3 to the bale support 10, and the remainder of the bale 3 is transported through the power transfer ring 15 during or after wrapping of the bale 3 or at unloading of the bale 3.

In some examples, the rotational wrapper ring 12 and the power transfer ring 15 may be positioned vertically. In some examples, the rotational wrapper ring 12 and the power transfer ring 15 may be inclined to the vertical. Optionally the power transfer ring 15 may be positioned in other planes for instance the horizontal. Positioning the rings 12, 15 vertically or near vertical enables a compact bale wrapper 1 to be realised.

In some examples, the power transfer ring 15 may have a radius equal to or greater than a radius of the rotational wrapper ring 12. Optionally the power transfer ring 15 is substantially equal or larger in outer dimensions than the rotational wrapper ring 12.

In some examples, the power transfer ring 15 may have a radius smaller than a radius of the rotational wrapper ring 12.

In some examples, the power transfer ring 15 may be located in front of or behind the rotational wrapper ring 12. Optionally the power transfer ring 15 is situated parallel next to the rotational wrapper ring 12. Optionally the power transfer ring 15 is situated behind the rotational wrapper ring 12, seen in the forward drive direction of the bale wrapper 1. Optionally the power transfer ring 15 is situated in front of the rotational wrapper ring 12, seen in the forward drive direction of the bale wrapper 1. Optionally the power transfer ring 15 may be located between the loading arm 22 (standalone wrapper) or the transfer means 22a (baler/wrapper combi) and the bale support 10. In each case, the power transfer ring 15 and the rotational wrapper ring 12 may be positioned so as to rotate about the same axis.

In some examples, the power transfer ring 15 may be located/positioned inside the rotational wrapper ring 12. That is to say, the power transfer ring 15 and the rotational wrapper ring 12 may be positioned so as to rotate about the same axis, and the power transfer ring 15 may have a smaller diameter such that the diameter of the outer edge of the power transfer ring 15 is smaller than the diameter of the inner edge of the rotational wrapper ring 12.

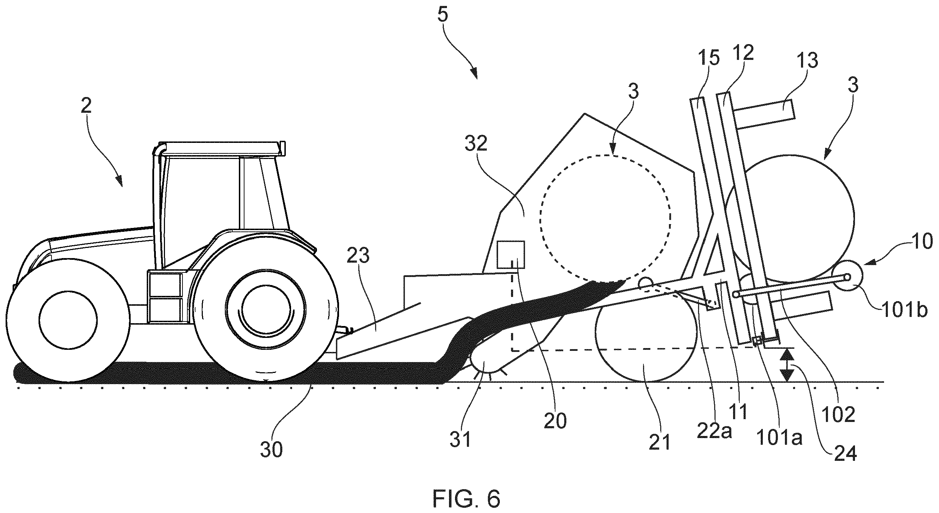

In some examples, there is provided a mobile agricultural combined baler/bale wrapper 5 for forming and wrapping a bale 3 comprising the mobile agricultural bale wrapper 1 as described above. The baler/bale wrapper combination 5 can be self-propelled or towed by a tractor 2 for driving on public roads and during operation in the field. Figure 6 shows a simplified combined baler/bale wrapper 5, in use in the field, when connected to a tractor 2. The bale 3 is subsequently wrapped and deposited in the field in the same manner as with a standalone bale wrapper.

As shown in figure 6, a line or swath 30 of cut agricultural crop may be collected by a pick-up 31 or another kind of collecting means, and transported into a bale chamber 32 for forming a bale 3 out of the collected crop.

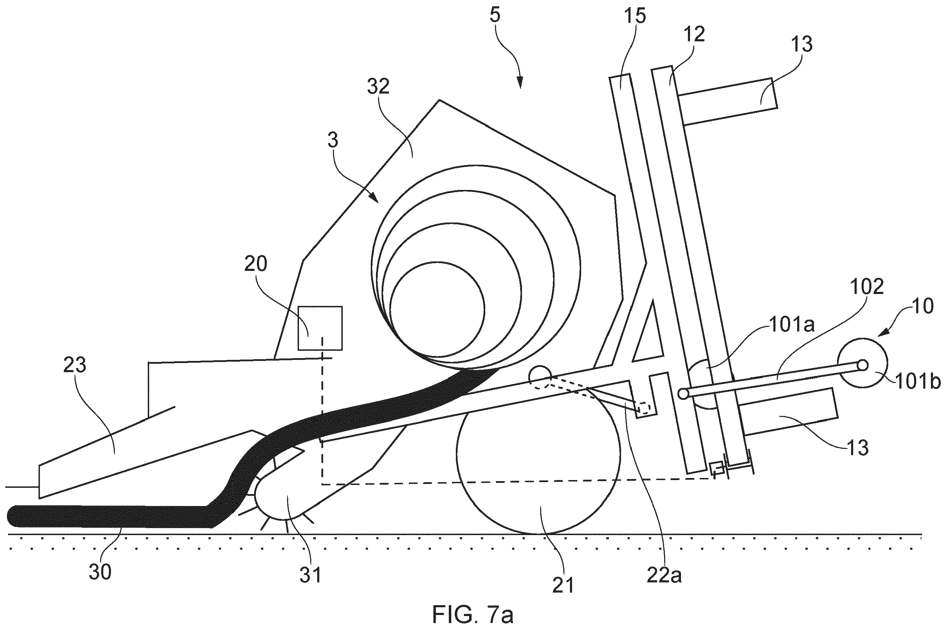

Figure 7a is a simplified side view of the combined baler/bale wrapper 5, showing a round bale 3 being formed when the combined baler/bale wrapper 5 is driving or being towed on the field (tractor 2 is not shown in figure 7a). The baler/bale wrapper combination 5 may take the crop from swaths 30 on the field via a pick-up/intake 31 and collect and compact the crop to round bales 3 in the bale chamber 32.

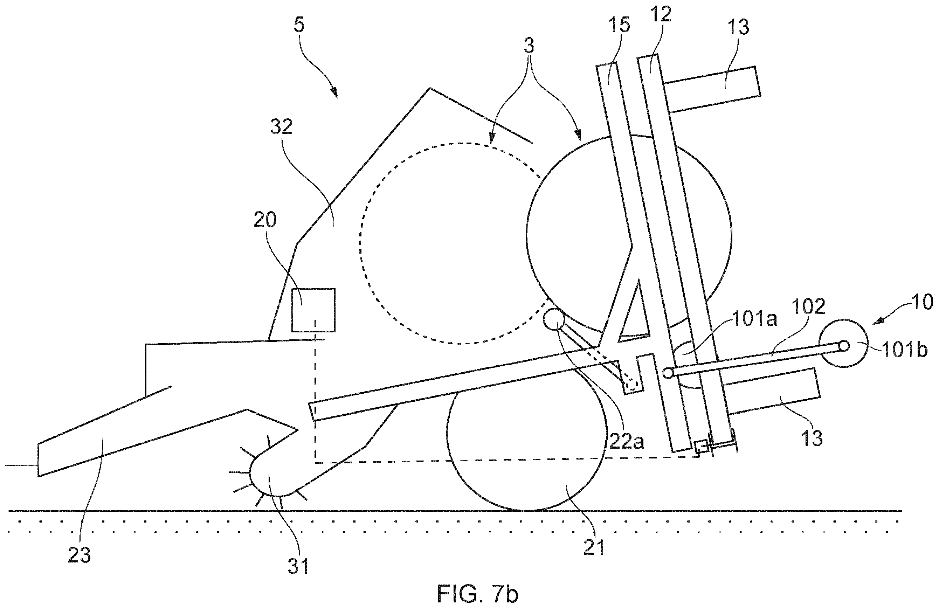

Figure 7b is a simplified side view of the combined baler/bale wrapper 5, showing a formed bale 3 being transferred from the baler part of the combined baler/bale wrapper 5 to the bale support 10 of the bale wrapper part of the combined baler/bale wrapper 5. When the bale 3 has reached its desired size, the bale 3 leaves the bale chamber 32 and is transported by transfer means 22a at least partly through the power transfer ring 15 and the rotational wrapper ring 12 to the bale support 10 of the baler/bale wrapper combination 5.

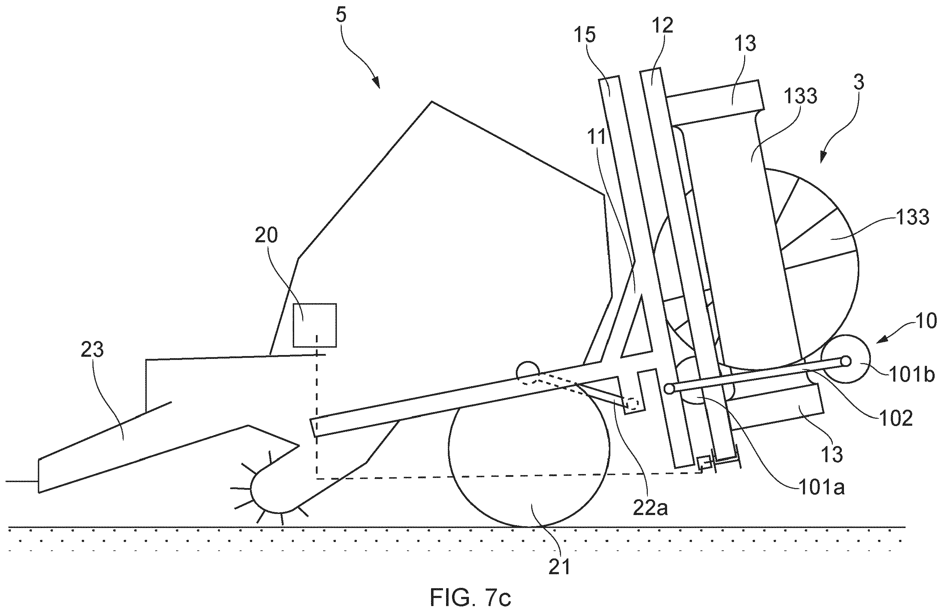

Figure 7c is a simplified side view of the combined baler/bale wrapper 5, showing the formed bale 3 being wrapped with stretch film 133. When wrapping the bale 3 with the stretch film 133, the bale 3 is rotated on the bale support 10 around it's longitudinal axis, X. At the same time the bale 3 is rotated on the bale support 10, the rotational wrapper ring 12 is rotating around its central axis, Y, which axis extends substantially perpendicular to the longitudinal axis X of the bale 3 in order to envelope the complete bale 3 with stretch film 133. The rotation speed of the bale 3 and the rotational wrapper ring 12 may be set to provide a desired amount of overlap between subsequent layers of stretch film 133 in order to ensure appropriate wrapping of the bale 3.

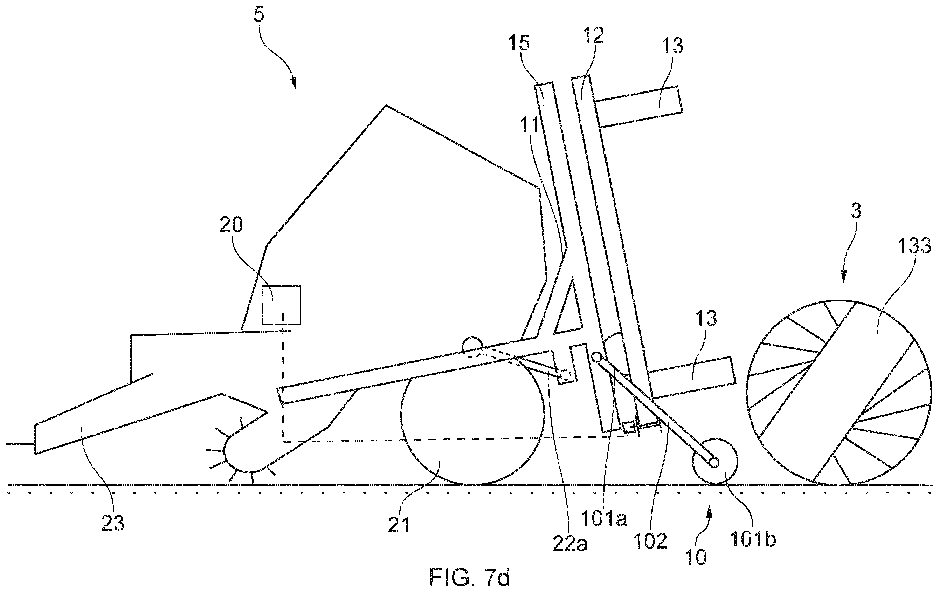

Figure 7d is a simplified side view of the combined baler/bale wrapper 5, showing the wrapped bale 3 deposited onto the ground. As shown in this figure, the rear roller 101b and the support 102 may be lowered so that the bale 3 may easily roll off the bale support 10 onto the ground.

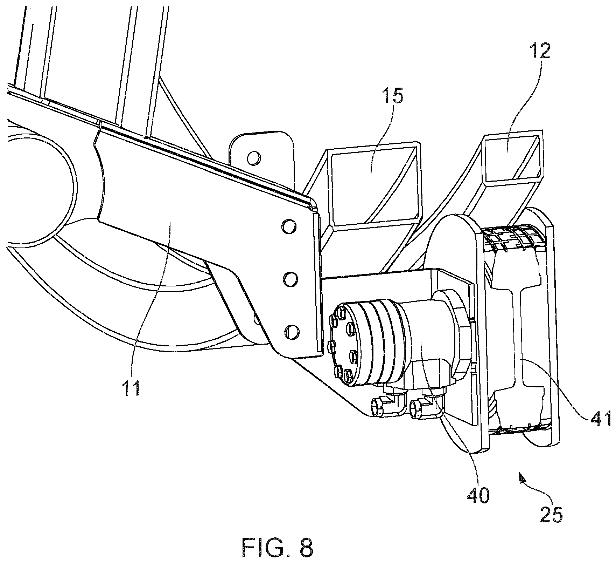

Figure 8 is a perspective cut-away view of an example of drive means for the rotational wrapper ring 12. The rotational wrapper ring 12 is driven by a drive motor 40. The drive motor 40 may be controlled by the control unit 20 of the bale wrapper 1 or baler/bale wrapper combination 5. The drive motor 40 may be connected to the rotational wrapper ring 12 by a transmission 41 to provide rotation from the drive motor 40 to the rotational wrapper ring 12. In some examples, the transmission 41 may be a wheel configured to contact the rotational wrapper ring 12, for example the outer surface of the rotational wrapper ring 12, as shown.

Figure 9a is a side cut-away view of an example of the pre-stretcher unit 14 and a pre-stretcher drive unit 141 comprising a friction wheel 1410.

As shown in figure 9a, the pre-stretcher unit 14 comprises two or more rollers 142a, 142b, positioned adjacent to each other and linked by gears 143a, 143b of different sizes, so that the rollers rotate at different speeds. In this way, the film 133 may be elongated by a desired amount. In this example, the rotation of the rollers 142a, 142b is driven by the friction wheel 1410. The friction wheel 1410 is in contact with the power transfer ring 15. The drive unit 141 may further include a gearing device or torque limiter 1411 between the friction wheel 1410 and the rollers 142a, 142b. The drive unit 141 may be fixed to the rotational wrapper ring 12. The friction wheel 1410 may be rotated based on relative rotation of the rotational wrapper ring 12 and the power transfer ring 15, to drive the film pre-stretcher unit 14 and rotate the rollers 142a, 142b.

Therefore, a friction wheel 1410 may be implemented to drive the film pre-stretcher unit 14, without the need for an additional power source or motor. That is, a friction wheel 1410 has fewer parts requiring maintenance and can be relatively compact, to avoid getting in the way of the bale 3 as the bale 3 is loaded onto the bale support 10. When rotating the dispensers 13 around the bale 3 by rotating the rotational wrapper ring 12, the friction wheel 1410 takes up mechanical power in the form of torque and speed by running against the power transfer ring 15. In this case no complex mechanical driveline is necessary, which makes the system cheaper, effective regarding maintenance and less susceptible to pollution.

In some examples, the friction wheel 1410 may be positioned to contact an inside surface 151a of the power transfer ring 15 or an outside surface 151b of the power transfer ring 15 or a leading edge 151c of the power transfer ring 15 or a trailing edge 151d of the power transfer ring 15. In this example, the leading edge 151c faces the forward direction of travel of the bale wrapper 1 when in normal use and the trailing edge 151d faces the reverse direction of travel of the bale wrapper 1 when in normal use. Figure 1 for example shows the forward direction of travel of the bale wrapper 1 when in normal use as towards the left and the reverse direction as towards the right.

Positioning the friction wheel 1410, so that it contacts the inside surface 151a of the power transfer ring 15 provides the benefit that the outer dimensions of the bale wrapper 1 may be reduced, meaning a more compact overall apparatus. Positioning the friction wheel 1410 on the outside/outer surface 151b of the power transfer ring 15 provides the benefit that larger bales 3 may pass through the power transfer ring 15 when loading/unloading, without catching on the friction wheel 1410. Positioning the friction wheel 1410 on the leading edge 151c of the power transfer ring 15 (relative to the normal direction of travel of the bale wrapper 1, as shown in Figure 1) provides the benefit that the friction wheel 1410 is located sufficiently out of the way of the rotating wrapper ring 12 to avoid obstruction or the need for adaptation to accommodate the friction wheel 1410. Positioning the friction wheel 1410 on the trailing edge 151d of the power transfer ring 15 (i.e. the edge facing the unloading side of the bale wrapper 1) provides the benefit that the distance between the friction wheel 1410 and the pre-stretcher unit 14 may be reduced.

In some examples, the drive unit 141 may comprise a form-closed, non-slippage drive system such as a system including gears and chains, which rotates based on relative rotation of the rotational wrapper ring 12 and the power transfer ring 15, to rotate the rollers 142a, 142b of the film pre-stretcher unit 14.

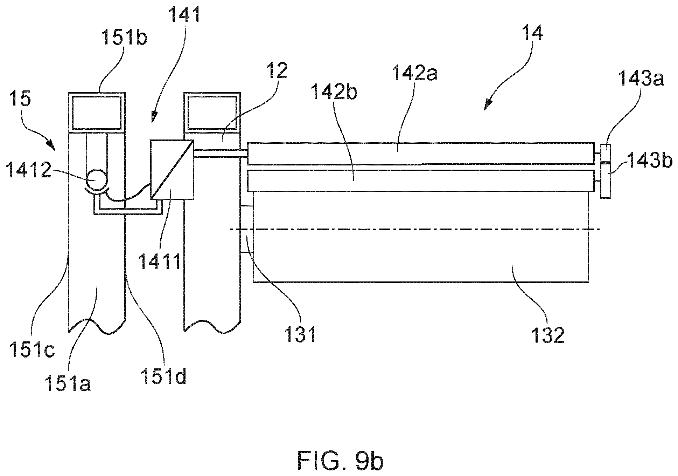

Figure 9b is a side cut-away view of an example of the pre-stretcher unit 14 and drive unit 141, according to a variation where the drive unit 141 comprises an electric, hydraulic or pneumatic motor.

In some examples, the drive unit 141 may comprise an electric, hydraulic or pneumatic motor to rotate the pre-stretcher unit 14 and where the power transfer ring 15 is transferring electric, hydraulic or pneumatic power to the drive unit 141. Optionally the power transfer ring 15 may provide means 1412 for guiding hydraulic fluid, compressed air or electrical power to a hydraulic, pneumatic or electric drive motor, respectively.

In some examples, the drive unit 141 may further comprise a gearbox or a torque limiter 1411. Optionally the driveline can be equipped with a torque limiter 1411 which can be connected to the gearing device to provide constant/predefined torque to the film pre-stretcher unit 14. Optionally the friction wheel 1410 or drive motor or the gearing device can be coupled directly (without torque limiter) to the film pre-stretcher unit 14 to provide constant/predefined speed to the film pre-stretcher unit 14.

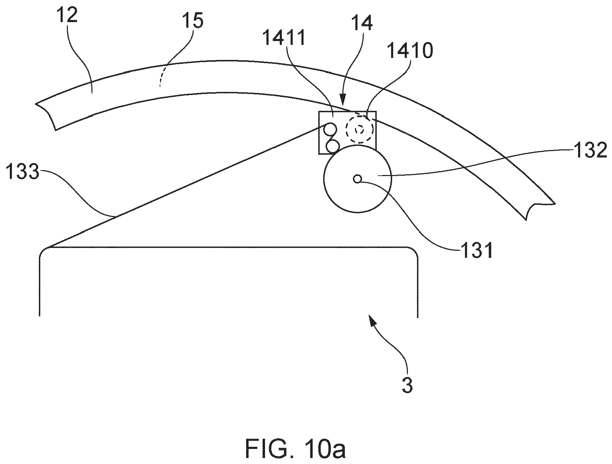

Figure 10a is a rear cut-away view of an example of the film pre-stretcher unit 14 and a pre-stretcher drive unit 141 comprising a friction wheel 1410. Figure 10a shows a different view of the example shown in figure 9a. In this example, a bale 3 is being wrapped. Alternatively, for the friction wheel 1410, a form-closed, non-slippage drive system such as a system including gears and chains could be used.

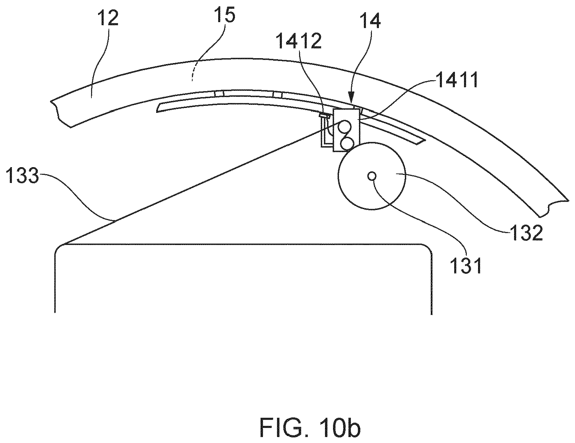

Figure 10b is a rear cut-away view of an example of the film pre-stretcher unit 14 and a pre-stretcher drive unit 141, according to a variation where the drive unit 141 comprises an electric, hydraulic or pneumatic motor. Figure 10b shows a different view of the example shown in figure 9b. In this example, a bale 3 is being wrapped.

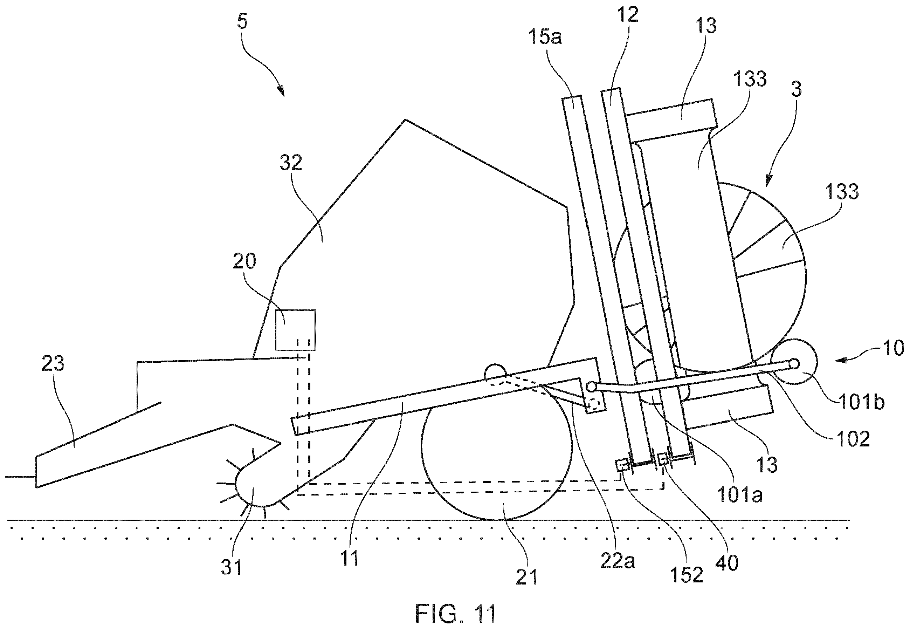

Figure 11 shows the mobile agricultural baler/bale wrapper combination 5 with a power transfer ring drive unit 152 to drive rotation of the power transfer ring 15a. In some examples, a standalone mobile agricultural bale wrapper 1 may comprise such a power transfer ring drive unit 152. In the example of figure 11, the power transfer ring 15a is able to be rotated relative to the support frame 11 and/or relative to the rotational wrapper ring 12.

Rotation delivered to the film pre-stretcher unit 14 from the friction wheel 1410 may be controlled or altered by adjusting the relative rotation of the rings 12, 15a. In one example, the power transfer ring 15a may be stationary (not rotating) while the rotational wrapper ring 12 rotates at a desired speed, as can be seen in figures 3a to 3d and 7a to 7d for example.

In another example, as can be derived from figure 11 for the baler/bale wrapper combination 5, both rings 12, 15a may be rotating, in the same direction, but at different speeds. In a further example, as can be derived from figure 11, both rings 12, 15a may be rotating, but in opposite directions, at either the same or different speeds, to achieve the desired relative rotation of the rings 12, 15a. In some examples, as can be seen in figure 11, the rotation directions and speeds may be controlled by a control unit 20.

Optionally the power transfer ring 15a may be rotated by a drive motor 152 (as an example of a drive unit) other than the drive motor 40 used to rotate the rotational wrapper ring 12. Optionally the drive motor 152 for the power transfer ring 15a may be controlled by a control unit of its own. Optionally the drive motor 152 for the power transfer ring 15a may be controlled by the control unit 20 of the bale wrapper or baler/bale wrapper combination 5. Optionally the power transfer ring 15a can be driven by the same drive motor 40 (combined drive motor) as the rotational wrapper ring 12. Optionally a gearing is positioned between the combined drive motor and the power transfer ring 15a. Optionally a separate control unit may control the gearing between the combined motor and the power transfer ring 15a. Optionally the control unit 20 of the bale wrapper 1 or the baler/bale wrapper combination 5 may control the gearing between the combined motor and the power transfer ring 15a.

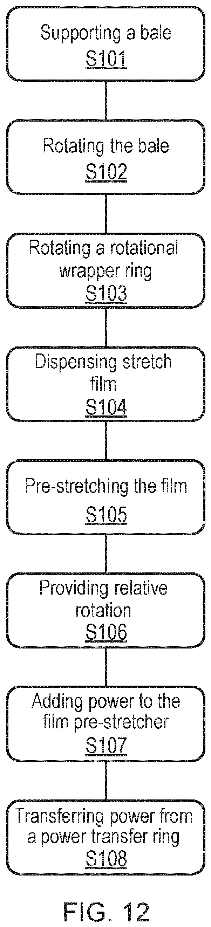

In some examples, there is provided an agricultural bale wrapping method. Figure 12 shows a flowchart of a method according to an example. The method may comprise supporting S101 a bale on a bale support and rotating S102 the bale about a first axis. The method may further comprise rotating S103 a rotational wrapper ring. The method may further comprise dispensing S104 stretch film from a film dispenser, when the rotational wrapper ring is rotated, to wrap the bale. The method may further comprise pre-stretching S105 the film, by an elongation amount, after the film is dispensed and before being applied to the bale for wrapping. The method may further comprise providing S106 relative rotation between the bale support and the film dispenser about a second axis that extends substantially perpendicular to the first axis, by the rotational wrapper ring, so that the pre-stretched film applied to the bale forms a bale wrapping that covers a side surface and end faces of the bale. The method may further comprise controlling S107 rotation of the film pre-stretcher unit, by a drive unit. The method may further comprise transferring S108 power to the drive unit from a power transfer ring, positioned substantially adjacent to the rotational wrapper ring.

While the above method sets out a number of steps taken in order to wrap a bale 3, it will be understood that those steps may be carried out in any suitable order. The method is not limited to the order described above as will be understood by the skilled person.

For example, the method may be carried out as follows. Supporting S101 a bale 3 on a bale support 10 and rotating S102 the bale 3 about a first axis X. At the same time rotating S103 a rotational wrapper ring 12 around a second axis Y. When rotating the rotational wrapper ring transferring S108 power to a drive unit 141 from a power transfer ring 15, positioned substantially adjacent to the rotational wrapper ring 12. Subsequently controlling S107 rotation of a film pre-stretcher unit 14, by the drive unit 141. Providing S106 relative rotation between the bale support 10 and a film dispenser 13 about a second axis Y that extends substantially perpendicular to the first axis X, by the rotational wrapper ring 12, so that the pre-stretched film 133 applied to the bale 3 forms a bale wrapping that covers a side surface and end faces of the bale 3. Dispensing S104 the stretch film 133 from the film dispenser 13, when the rotational wrapper ring 12 is rotated, to wrap the bale 3. Pre-stretching S105 the film 133, by an elongation amount, after the film 133 is dispensed and before the film 133 is applied to the bale 3.

The invention may be embodied either in a dedicated bale wrapper or a combined baler/bale wrapper machine.

## Claims

1. A mobile agricultural bale wrapper comprising:
a bale support (10) for supporting a bale (3) and rotating the bale (3) about a first axis (X);
a rotational wrapper ring (12) comprising a film dispenser (13), the film dispenser (13) comprising a holder (131) for a roll (132) of stretch film (133) to dispense the film (133) when the rotational wrapper ring (12) is rotated; and
a film pre-stretcher unit (14) that is configured to pre-stretch the film (133) by an elongation amount and apply the pre-stretched film to the bale (3);
the rotational wrapper ring (12) providing relative rotation between the bale support (10) and the film dispenser (13) about a second axis (Y) that extends substantially perpendicular to the first axis (X) so that the pre-stretched film applied to the bale (3) forms a bale wrapping that covers a side surface and end faces of the bale (3), and
the film pre-stretcher unit (14) comprising a drive unit (141) to add power to the film pre-stretcher unit (14) for controlling rotation of the film pre-stretcher unit (14); the mobile agricultural bale wrapper further comprising:
a power transfer ring (15), substantially adjacent the rotational wrapper ring (12), to transfer power to the drive unit (141).

2. The mobile agricultural bale wrapper of claim 1, wherein the drive unit (141) comprises a friction wheel (1410), which rotates based on relative rotation of the rotational wrapper ring (12) and the power transfer ring (15), to add power to the pre-stretcher unit (14) for controlling rotation of the film pre-stretcher unit (14).

3. The mobile agricultural bale wrapper of claim 2, wherein the friction wheel (1410) is positioned to contact:
an inside surface (151a) of the power transfer ring (15); or
an outside surface (151b) of the power transfer ring (15); or
a leading edge (151c) of the power transfer ring (15); or
a trailing edge (151d) of the power transfer ring (15).

4. The mobile agricultural bale wrapper of claim 1, wherein the drive unit (141) comprises an electric, hydraulic or pneumatic motor to add power to the pre-stretcher unit (14) for controlling rotation of the pre-stretcher unit (14) and where the power transfer ring (15) is transferring electric, hydraulic or pneumatic power to the drive unit (141).

5. The mobile agricultural bale wrapper of claim 1, wherein the drive unit (141) comprises a form-closed, non-slippage drive system which rotates based on relative rotation of the rotational wrapper ring (12) and the power transfer ring (15), to add power to the pre-stretcher unit (14) for controlling rotation of the film pre-stretcher unit (14).

6. The mobile agricultural bale wrapper of any preceding claim, wherein the bale (3) to be wrapped is passed at least partly through the rotational wrapper ring (12) and the power transfer ring (15) before wrapping.

7. The mobile agricultural bale wrapper of any preceding claim, wherein the drive unit (141) further comprises a gearbox or a torque limiter (1411).

8. The mobile agricultural bale wrapper of any preceding claim, wherein the power transfer ring (15) rotates in a same direction as, or in an opposite direction relative to, the rotation direction of the rotational wrapper ring (12).

9. The mobile agricultural bale wrapper of any preceding claim, further comprising:
a power transfer ring drive unit (152) to drive rotation of the power transfer ring (15a).

10. The mobile agricultural bale wrapper of any preceding claim, wherein the rotational wrapper ring (12) and the power transfer ring (15) are positioned vertically.

11. The mobile agricultural bale wrapper of any of claims 1 to 9, wherein the rotational wrapper ring (12) and the power transfer ring (15) are inclined to the vertical.

12. The mobile agricultural bale wrapper of any preceding claim,
wherein the power transfer ring (15) has a radius equal to or greater than a radius of the rotational wrapper ring (12); or
wherein the power transfer ring (15) has a radius smaller than a radius of the rotational wrapper ring (12).

13. The mobile agricultural bale wrapper of any preceding claim,
wherein the power transfer ring (15) is located in front of or behind the rotational wrapper ring (12); or
wherein the power transfer ring (15) is located inside the rotational wrapper ring (12).

14. A mobile agricultural combined baler/bale wrapper (5) for forming and wrapping a bale (3) comprising the mobile agricultural bale wrapper of any preceding claim.

15. An agricultural bale wrapping method comprising:
supporting (S101) a bale (3) on a bale support (10) and rotating (S102) the bale (3) about a first axis (X);
rotating (S103) a rotational wrapper ring (12);
dispensing (S104) stretch film (133) from a film dispenser (13), when the rotational wrapper ring (12) is rotated, to wrap the bale (3);
pre-stretching (S105), by a film pre-stretcher unit (14), the film (133), by an elongation amount, after the film (133) is dispensed and before being applied to the bale (3) for wrapping;
providing (S106) relative rotation between the bale support (10) and the film dispenser (13) about a second axis (Y) that extends substantially perpendicular to the first axis (X), by the rotational wrapper ring (12), so that the pre-stretched film applied to the bale (3) forms a bale wrapping that covers a side surface and end faces of the bale (3);
adding power to the film pre-stretcher unit (14), for controlling (S107) rotation of the film pre-stretcher unit (14), by a drive unit (141); and
transferring (S108) power to the drive unit (141) from a power transfer ring (15), positioned substantially adjacent to the rotational wrapper ring (12).

## Patentansprüche

1. Ein mobiler landwirtschaftlicher Ballenwickler, der Folgendes beinhaltet:
einen Ballenträger (10) zum Tragen eines Ballens (3) und Drehen des Ballens (3) um eine erste Achse (X);
einen sich drehenden Wickelring (12), der einen Folienspender (13) beinhaltet, wobei der Folienspender (13) einen Halter (131) für eine Rolle (132) von Stretchfolie (133) beinhaltet, um die Folie (133) auszugeben, wenn der sich drehende Wickelring (12) gedreht wird; und
eine Folienvorstreckeinheit (14), die konfiguriert ist, um die Folie (133) um einen Dehnungsbetrag vorzustrecken und die vorgestreckte Folie auf den Ballen (3) aufzubringen;
wobei der sich drehende Wickelring (12) eine relative Drehung zwischen dem Ballenträger (10) und dem Folienspender (13) um eine zweite Achse (Y) bereitstellt, die sich im Wesentlichen senkrecht zur ersten Achse (X) erstreckt, sodass die vorgestreckte Folie, die auf den Ballen (3) aufgebracht wird, eine Ballenumwicklung bildet, die eine Seitenfläche und Endflächen des Ballens (3) bedeckt, und
wobei die Folienvorstreckeinheit (14) eine Antriebseinheit (141) beinhaltet, um der Folienvorstreckeinheit (14) Leistung hinzuzufügen, um die Drehung der Folienvorstreckeinheit (14) zu steuern; wobei der mobile landwirtschaftliche Ballenwickler ferner Folgendes beinhaltet:
einen Leistungsübertragungsring (15), der im Wesentlichen an den sich drehenden Wickelring (12) angrenzt, um Leistung auf die Antriebseinheit (141) zu übertragen.

2. Mobiler landwirtschaftlicher Ballenwickler gemäß Anspruch 1, wobei die Antriebseinheit (141) ein Reibrad (1410) beinhaltet, das sich basierend auf der relativen Drehung des sich drehenden Wickelrings (12) und des Leistungsübertragungsrings (15) dreht, um der Vorstreckeinheit (14) Leistung hinzuzufügen, um die Drehung der Folienvorstreckeinheit (14) zu steuern.

3. Mobiler landwirtschaftlicher Ballenwickler gemäß Anspruch 2, wobei das Reibrad (1410) positioniert ist, um Folgendes zu berühren:
eine Innenfläche (151a) des Leistungsübertragungsrings (15); oder
eine Außenfläche (151b) des Leistungsübertragungsrings (15); oder
eine Vorderkante (151c) des Leistungsübertragungsrings (15); oder
eine Hinterkante (151d) des Leistungsübertragungsrings (15).

4. Mobiler landwirtschaftlicher Ballenwickler gemäß Anspruch 1, wobei die Antriebseinheit (141) einen elektrischen, hydraulischen oder pneumatischen Motor beinhaltet, um der Vorstreckeinheit (14) Leistung hinzuzufügen, um die Drehung der Vorstreckeinheit (14) zu steuern, und wobei der Leistungsübertragungsring (15) elektrische, hydraulische oder pneumatische Leistung auf die Antriebseinheit (141) überträgt.

5. Mobiler landwirtschaftlicher Ballenwickler gemäß Anspruch 1, wobei die Antriebseinheit (141) ein formschlüssiges, schlupffreies Antriebssystem beinhaltet, das sich basierend auf der relativen Drehung des sich drehenden Wickelrings (12) und des Leistungsübertragungsrings (15) dreht, um der Vorstreckeinheit (14) Leistung hinzuzufügen, um die Drehung der Folienvorstreckeinheit (14) zu steuern.

6. Mobiler landwirtschaftlicher Ballenwickler gemäß einem der vorhergehenden Ansprüche, wobei der zu wickelnde Ballen (3) vor dem Wickeln mindestens teilweise durch den sich drehenden Wickelring (12) und den Leistungsübertragungsring (15) geführt wird.

7. Mobiler landwirtschaftlicher Ballenwickler gemäß einem der vorhergehenden Ansprüche, wobei die Antriebseinheit (141) ferner ein Getriebe oder einen Drehmomentbegrenzer (1411) beinhaltet.

8. Mobiler landwirtschaftlicher Ballenwickler gemäß einem der vorhergehenden Ansprüche, wobei sich der Leistungsübertragungsring (15) in derselben Richtung wie die oder in einer entgegengesetzten Richtung relativ zu der Drehrichtung des sich drehenden Wickelrings (12) dreht.

9. Mobiler landwirtschaftlicher Ballenwickler gemäß einem der vorhergehenden Ansprüche, der ferner Folgendes beinhaltet:
eine Leistungsübertragungsringantriebseinheit (152), um die Drehung des Leistungsübertragungsrings (15a) anzutreiben.

10. Mobiler landwirtschaftlicher Ballenwickler gemäß einem der vorhergehenden Ansprüche, wobei der sich drehende Wickelring (12) und der Leistungsübertragungsring (15) vertikal positioniert sind.

11. Mobiler landwirtschaftlicher Ballenwickler gemäß einem der Ansprüche 1 bis 9, wobei der sich drehende Wickelring (12) und der Leistungsübertragungsring (15) zu der Vertikalen geneigt sind.

12. Mobiler landwirtschaftlicher Ballenwickler gemäß einem der vorhergehenden Ansprüche,
wobei der Leistungsübertragungsring (15) einen Radius aufweist, der gleich oder größer als ein Radius des sich drehenden Wickelrings (12) ist; oder
wobei der Leistungsübertragungsring (15) einen Radius aufweist, der kleiner als ein Radius des sich drehenden Wickelrings (12) ist.

13. Mobiler landwirtschaftlicher Ballenwickler gemäß einem der vorhergehenden Ansprüche,
wobei der Leistungsübertragungsring (15) vor oder hinter dem sich drehenden Wickelring (12) angeordnet ist; oder
wobei der Leistungsübertragungsring (15) innerhalb des sich drehenden Wickelrings (12) angeordnet ist.

14. Eine mobile landwirtschaftliche kombinierte Ballenpresse/Ballenwickler (5) zum Bilden und Wickeln eines Ballens (3), der den mobilen landwirtschaftlichen Ballenwickler gemäß einem der vorhergehenden Ansprüche beinhaltet.

15. Ein landwirtschaftliches Ballenwickelverfahren, das Folgendes beinhaltet:
Tragen (S101) eines Ballens (3) auf einem Ballenträger (10) und Drehen (S102) des Ballens (3) um eine erste Achse (X);
Drehen (S103) eines sich drehenden Wickelrings (12);
Ausgeben (S104) von Stretchfolie (133) aus einem Folienspender (13), wenn der sich drehende Wickelring (12) gedreht wird, um den Ballen (3) zu wickeln;
Vorstrecken (S105), durch eine Folienvorstreckeinheit (14), der Folie (133) um einen Dehnungsbetrag, nachdem die Folie (133) ausgegeben wurde und bevor sie auf den Ballen (3) zum Wickeln aufgebracht wird;
Bereitstellen (S106) einer relativen Drehung zwischen dem Ballenträger (10) und dem Folienspender (13) um eine zweite Achse (Y), die sich im Wesentlichen senkrecht zur ersten Achse (X) erstreckt, durch den sich drehenden Wickelring (12), sodass die vorgestreckte Folie, die auf den Ballen (3) aufgebracht wird, eine Ballenumwicklung bildet, die eine Seitenfläche und Endflächen des Ballens (3) bedeckt;
Hinzufügen von Leistung zur Folienvorstreckeinheit (14), um die Drehung der Folienvorstreckeinheit (14) zu steuern (S107), durch eine Antriebseinheit (141); und
Übertragen (S108) von Leistung auf die Antriebseinheit (141) von einem Leistungsübertragungsring (15), der im Wesentlichen an den sich drehenden Wickelring (12) angrenzend positioniert ist.

## Revendications

1. Une enrubanneuse de balles agricole mobile comprenant :
un support de balle (10) pour supporter une balle (3) et faire effectuer une rotation à la balle (3) autour d'un premier axe (X) ;
un anneau d'enrubanneuse rotatif (12) comprenant un distributeur de film (13), le distributeur de film (13) comprenant un porte-élément (131) pour un rouleau (132) de film étirable (133) afin de distribuer le film (133) lorsque l'anneau d'enrubanneuse rotatif (12) est amené à effectuer une rotation ; et
une unité pré-étireur de film (14) qui est configurée afin de pré-étirer le film (133) d'une quantité d'allongement et d'appliquer le film pré-étiré sur la balle (3) ;
l'anneau d'enrubanneuse rotatif (12) fournissant une rotation relative entre le support de balle (10) et le distributeur de film (13) autour d'un deuxième axe (Y) qui s'étend de manière substantiellement perpendiculaire au premier axe (X) de sorte que le film pré-étiré appliqué sur la balle (3) forme un enrubannage de balle qui recouvre une surface latérale et des faces d'extrémité de la balle (3), et
l'unité pré-étireur de film (14) comprenant une unité d'entraînement (141) afin d'ajouter de la puissance à l'unité pré-étireur de film (14) pour commander la rotation de l'unité pré-étireur de film (14) ; l'enrubanneuse de balles agricole mobile comprenant en outre :
un anneau de transfert de puissance (15), substantiellement adjacent à l'anneau d'enrubanneuse rotatif (12), afin de transférer de la puissance à l'unité d'entraînement (141).

2. L'enrubanneuse de balles agricole mobile de la revendication 1, dans laquelle l'unité d'entraînement (141) comprend une roue de friction (1410), qui effectue une rotation sur la base d'une rotation relative de l'anneau d'enrubanneuse rotatif (12) et de l'anneau de transfert de puissance (15), afin d'ajouter de la puissance à l'unité pré-étireur (14) pour commander la rotation de l'unité pré-étireur de film (14).

3. L'enrubanneuse de balles agricole mobile de la revendication 2, dans laquelle la roue de friction (1410) est positionnée afin d'entrer en contact avec :
une surface intérieure (151a) de l'anneau de transfert de puissance (15) ; ou
une surface extérieure (151b) de l'anneau de transfert de puissance (15) ; ou
un bord d'attaque (151c) de l'anneau de transfert de puissance (15) ; ou
un bord de fuite (151d) de l'anneau de transfert de puissance (15).

4. L'enrubanneuse de balles agricole mobile de la revendication 1, dans laquelle l'unité d'entraînement (141) comprend un moteur électrique, hydraulique ou pneumatique afin d'ajouter de la puissance à l'unité pré-étireur (14) pour commander la rotation de l'unité pré-étireur (14) et où l'anneau de transfert de puissance (15) transfère de la puissance électrique, hydraulique ou pneumatique à l'unité d'entraînement (141).

5. L'enrubanneuse de balles agricole mobile de la revendication 1, dans laquelle l'unité d'entraînement (141) comprend un système d'entraînement sans glissement à fermeture géométrique qui effectue une rotation sur la base d'une rotation relative de l'anneau d'enrubanneuse rotatif (12) et de l'anneau de transfert de puissance (15), afin d'ajouter de la puissance à l'unité pré-étireur (14) pour commander la rotation de l'unité pré-étireur de film (14).

6. L'enrubanneuse de balles agricole mobile de n'importe quelle revendication précédente, dans laquelle la balle (3) à enrubanner est passée au moins partiellement à travers l'anneau d'enrubanneuse rotatif (12) et l'anneau de transfert de puissance (15) avant l'enrubannage.

7. L'enrubanneuse de balles agricole mobile de n'importe quelle revendication précédente, dans laquelle l'unité d'entraînement (141) comprend en outre une boîte d'engrenages ou un limiteur de couple (1411).

8. L'enrubanneuse de balles agricole mobile de n'importe quelle revendication précédente, dans laquelle l'anneau de transfert de puissance (15) effectue une rotation dans un sens identique au, ou dans un sens opposé par rapport au, sens de rotation de l'anneau d'enrubanneuse rotatif (12).

9. L'enrubanneuse de balles agricole mobile de n'importe quelle revendication précédente, comprenant en outre :
une unité d'entraînement d'anneau de transfert de puissance (152) afin d'entraîner la rotation de l'anneau de transfert de puissance (15a).

10. L'enrubanneuse de balles agricole mobile de n'importe quelle revendication précédente, dans laquelle l'anneau d'enrubanneuse rotatif (12) et l'anneau de transfert de puissance (15) sont positionnés verticalement.

11. L'enrubanneuse de balles agricole mobile de n'importe lesquelles des revendications 1 à 9, dans laquelle l'anneau d'enrubanneuse rotatif (12) et l'anneau de transfert de puissance (15) sont inclinés par rapport à la verticale.

12. L'enrubanneuse de balles agricole mobile de n'importe quelle revendication précédente,
dans laquelle l'anneau de transfert de puissance (15) a un rayon égal ou supérieur à un rayon de l'anneau d'enrubanneuse rotatif (12) ; ou
dans laquelle l'anneau de transfert de puissance (15) a un rayon inférieur à un rayon de l'anneau d'enrubanneuse rotatif (12).

13. L'enrubanneuse de balles agricole mobile de n'importe quelle revendication précédente,
dans laquelle l'anneau de transfert de puissance (15) est situé devant ou derrière l'anneau d'enrubanneuse rotatif (12) ; ou
dans laquelle l'anneau de transfert de puissance (15) est situé à l'intérieur de l'anneau d'enrubanneuse rotatif (12).

14. Une presse à balles/enrubanneuse de balles agricole mobile combinée (5) pour former et enrubanner une balle (3) comprenant l'enrubanneuse de balles agricole mobile de n'importe quelle revendication précédente.

15. Un procédé d'enrubannage de balles agricole comprenant :
le support (S101) d'une balle (3) sur un support de balle (10) et la rotation (S102) de la balle (3) autour d'un premier axe (X) ;
la rotation (S103) d'un anneau d'enrubanneuse rotatif (12) ;
la distribution (S104) d'un film étirable (133) à partir d'un distributeur de film (13), lorsque l'anneau d'enrubanneuse rotatif (12) est amené à effectuer une rotation, afin d'enrubanner la balle (3) ;
le pré-étirage (S105), par une unité pré-étireur de film (14), du film (133), d'une quantité d'allongement, après que le film (133) a été distribué et avant d'être appliqué sur la balle (3) pour l'enrubannage ;
la fourniture (S106) d'une rotation relative entre le support de balle (10) et le distributeur de film (13) autour d'un deuxième axe (Y) qui s'étend de manière substantiellement perpendiculaire au premier axe (X), par l'anneau d'enrubanneuse rotatif (12), de sorte que le film pré-étiré appliqué sur la balle (3) forme un enrubannage de balle qui recouvre une surface latérale et des faces d'extrémité de la balle (3) ;
l'ajout de puissance à l'unité pré-étireur de film (14), pour commander (S107) la rotation de l'unité pré-étireur de film (14), par une unité d'entraînement (141) ; et
le transfert (S108) de puissance à l'unité d'entraînement (141) à partir d'un anneau de transfert de puissance (15), positionné de manière substantiellement adjacente à l'anneau d'enrubanneuse rotatif (12).
